Europäisches Patentamt

European Patent Office

Office européen des brevets

(19)

(11) Publication number: **0 221 446**
**A2**

# (12) EUROPEAN PATENT APPLICATION

(21) Application number: **86114629.8**

(22) Date of filing: **22.10.86**

(51) Int. Cl.⁴: **C01B 17/50**

(30) Priority: **04.11.85 US 794367**

(43) Date of publication of application:
**13.05.87 Bulletin 87/20**

(84) Designated Contracting States:
**BE DE IT NL**

(71) Applicant: **ALLIED CORPORATION**
**Columbia Road and Park Avenue P.O. Box 2245R (Law Dept.)**
**Morristown New Jersey 07960(US)**

(72) Inventor: **Nelson, Theodore Paul c/o Allied Corporation**
**P.O. Box 2245R**
**Morristown New Jersey 07960(US)**
Inventor: **Greenburg, Julius (NMN)c/o Allied Corporation**
**P.O. Box 2245R**
**Morristown New Jersey 07960(US)**
Inventor: **Gentill, Robert Paul c/o Allied Corporation**
**P.O. Box 2245R**
**Morristown New Jersey 07960(US)**

(74) Representative: **Brulié, Jean et al**
**Service Brevets Bendix 44, rue François 1er**
**F-75008 Paris(FR)**

(54) **Method to cool and dry hot gases containing sulfur oxides with strong sulfuric acid.**

(57) Concentrated sulfuric acid (i.e., above about 70 weight percent and preferably above 93 weight percent) is used to cool hot sulfur combustion products. In addition, water and some of the sulfur oxides are removed from the gas stream. The hot sulfur combustion products enter a contacting device, such as a cooling tower, where they come in contact with cool sulfuric acid. The gases exit the tower cooled and dry. The strong sulfuric acid which is fed to the contacting device is heated up by contacting the sulfur combustion gases. In addition, the effluent acid concentration will be somewhat less than that fed due to water absorbed. Some of the hot acid is purged from the strong acid circulating system while a make-up of more concentrated acid is added so that the desired acid concentration can be maintained. The acid is then fed to a cooling device prior to introduction back into the contacting device.

FIGURE 1

Exit Gas
$110^{o}$F
12-17% $SO_2$
$H_2O$ NIL

~ 2

95% $H_2SO_4$    8
$100^{o}$F

98%-120%
$H_2SO_4$ Make-up

CONTACTOR    3    4

A

COOLER

B

$120^{o}$F    5

Reject Acid

6    7

~ 1

Hot Gas
>$500^{o}$F
12-17% $SO_2$
$H_2O$

# METHOD TO COOL AND DRY HOT GASES CONTAINING SULFUR OXIDES WITH STRONG SULFURIC ACID

## BACKGROUND OF THE INVENTION

This invention relates to a method to cool and dry hot gases containing sulfur oxides with strong sulfuric acid. The cooled and dried gases can be used to produce hydroxylamine disulfonate intermediate in a caprolactam process. Sulfur dioxide is absorbed in ammonium nitrite/carbonate/bicarbonate solution.

The prior art method to make feed gases to manufacture disulfonate utilized weak (about 20 percent) acid to cool the sulfur oxide gases. The weak sulfuric acid is extremely corrosive and equipment made of exotic alloys were subject to corrosion and short life spans. A major portion of the cooling was accomplished by humidification of the sulfur oxides which increased refrigeration, utility and process loads downstream.

## SUMMARY OF THE INVENTION

This invention is a method to cool and dry hot gases containing sulfur oxides. The method consists of contacting the gases in a single-stage contacting device with cooler liquid sulfuric acid, said acid being concentrated to greater than 70 percent by weight, and removing the gases from contact with the acid and recirculating the acid through a cooler and back to the contacting device and purging some of the diluted acid from the recirculating acid and adding make-up acid to the recirculating acid. The process operates so that gases are dried to contain less than 29 mg water per normal cubic meter of gas, and the temperature of the gas is reduced by more than 200°C during a gas contact time of less than 0.5 second and an acid contact time of less than one second at a gas velocity of from about 3 to 10 meters per second, and the concentration of the recirculating acid being added to the contact device remains subsantially constant. The preferred acid concentration being added to the contacting device is greater than about 93 percent. The preferred make-up acid concentration is between about 98 percent acid and 28 percent oleum. The gases introduced to the contacting device are at a temperature greater than 260°C and exit the contacting device at a temperature less than about 60°C. It is preferred that the contacting device be a cooling tower having means to spray the acid into the gases. It is also preferred that the recirculating acid be added to the cooling tower at a rate of between about 0.5 and 2.5 $\times$ $10^6$ m² new surface area per hour. Even more preferably the recirculating acid is added at a rate of between about 1.0 to 2.0 $\times$ $10^6$ m² new surface area per hour.

This invention offers a number of advantages:

1. The strong sulfuric acid, greater than 70 weight percent and preferably greater then 93 weight percent reduces equipment corrosion and allows equipment to be made of less exotic materials.

2. The sulfur oxide gases are dehydrated reducing utility loads particularly refrigeration in downstream processing equipment.

3. The process recovers sulfur trioxide produced in the sulfur combustion as sulfuric acid which can be reprocessed to any desired strength. In addition, the recovery of sulfur trioxide will reduce ammonium sulfate by product production in the caprolactam process.

4. The dehydration of the sulfur oxide gases will reduce the amount of water which ends up in the by-product ammonium sulfate solution. This in turn will save energy in the ammonium sulfate processing steps.

5. The reduced refrigeration load which the sulfur oxide dehydration caused will permit lower processinq temperatures and therefore hiqher yields in the production of the disulfonate. The higher yields will reduce ammonia and sulfur usage in the production of caprolactam from disulfonate.

## BRIEF DESCRIPTION OF THE DRAWINGS

Figure I is a schematic showing apparatus for practicing the method of this invention.

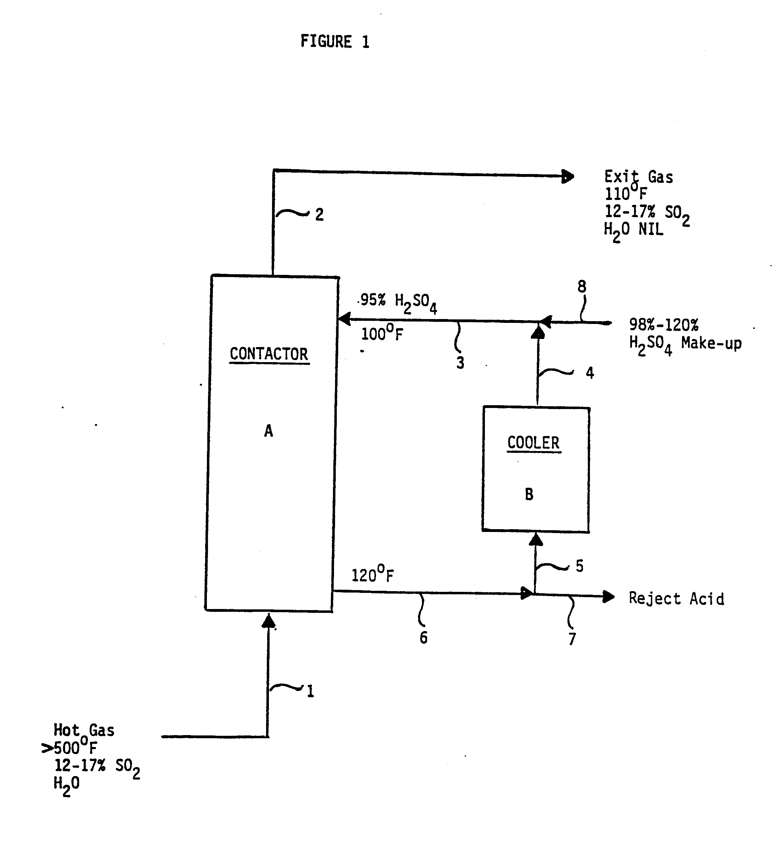

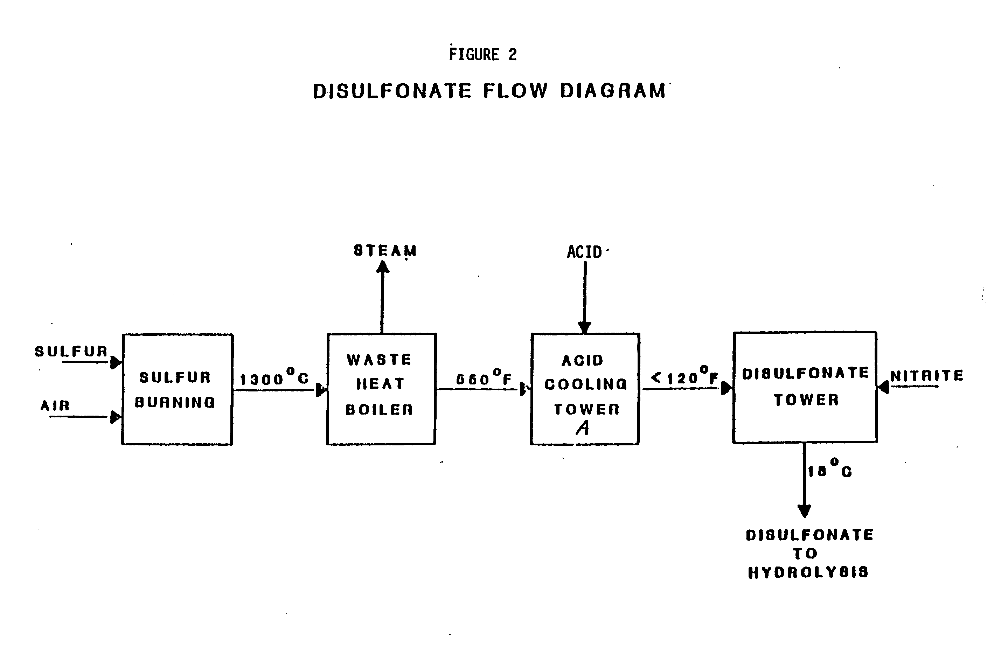

Figure 2 is a schematic showing the apparatus using the acid cooiing tower or contactor A in the overall process to make hydroxylamine disulfonate intermediate in the production of caprolactam.

## DESCRIPTION OF THE PREFERRED EMBODIMENT OF THE INVENTION

Figure I shows contactor A which can be a brick-lined acid cooling tower with spray apparatus to cause fine droplets of strong acid across the flow of the hot sulfur oxide bearing gases, such spray apparatus being well known in the prior art. Hot gas at 500 to 550°F (288°C) containing I2 to I7 percent by weight of $SO_2$, up to I.5 percent moisture, and about I percent $SO_3$ enters line I from sulfur burning apparatus, and flows through line I to contactor A. Strong sulfuric acid (93 to 95 percent by weight) enters contactor A by line 3 and is contacted with the hot gases flowing through contactor A by spraying the strong acid across the path of the hot gases at multiple points. The dried and cooled gases exit contactor A from line 2 at II0°F (44°C) with only about I2 to 28 mg/Nm³ of moisture, very small amounts of $SO_3$ and I2 to I7 percent of $SO_2$. The strong sulfuric acid is removed through line 6 from the bottom of contactor A at about I20°F (49°C) and a small portion is rejected for use in the strong acid plant (not shown), through line 7. The major portion of the strong acid flows through line 5 to cooler B, which can be a typical heat exchanger, where it is cooled to I00°F (38°C) and exits through line 4 to circulate back into contactor A through line 3. Make-up acid at 98 percent acid to 28 percent oleum is added through line 8 to keep the acid added to contactor A through line 3 at about 95 percent by weight acid.

Figure 2 shows the upstream feed to, and use of $SO_2$ containing gases from contactor A, now labeled acid cooling tower A. As indicated on the drawing, sulfur and air are burned to create I300°C gases containing sulfur oxides and moisture, this effluent is cooled by a typical waste heat boiler to 550°F - (288°C) producing steam. The acid cooling tower A further cools the hot gases to less than I20°F (49°C). The $SO_2$ containing gases are then absorbed by ammonium nitrite/carbonate/bicarbonate solution to form hydroxylamine disulfonate, used in the production of caprolactam.

### Cooling Tower A

#### Typical Operating Conditions

| | |
|---|---|
| **Temperature, °C** | |
| Acid Inlet | 35 – 40 |
| Acid Outlet | 49 – 57 |
| Gas Inlet | 260 – 288 |
| Gas Outlet | 40 – 49 |
| **Gas Velocity, m/sec** | 4.3 – 7.9 |
| **Acid Concentration, % by wt** | 93 – 95 |
| **Rate of Introduction of New Surface Area of Acid, m²/hr** | $1 - 2 \times 10^6$ |
| **Droplet Size, microns** | 700 |
| **Contact Time, sec** | |
| Acid | 0.35 – 0.47 |
| Gas | 0.13 – 0.28 |
| **Moisture Content of Gas** | |
| Incoming, % by wt | 1.5 |
| Outgoing, mg/Nm³ | 12 – 28 |

**Claims**

I. A method to cool and dry hot gases containing sulfur oxides consisting of
contacting said gases in a single-stage contacting device with cooler liquid sulfuric acid, said acid being concentrated to greater than 70 percent by weight, and
removing said gases from contact with said acid, and

recirculating said acid through a cooler and back to said contacting device, and

purging some of said diluted acid from said recirculating acid, and

adding make-up acid to said recirculating acid, so that said gases are dried to contain less than 29 mg water per normal cubic meter of gas, and the temperature of the gas is reduced by more than 200°C during a gas contact time of less than 0.5 second and an acid contact time of less than one second at a gas velocity of from about 3 to 10 meters per second, and the concentration of said recirculating acid being added to said contact device remains substantially constant.

2. The method of claim 1 wherein said acid concentration is greater than about 93 percent.

3. The method of claim 2 wherein said make-up acid concentration is between about 98 percent acid and about 28 percent oleum.

4. The method claim 2 wherein said gases are introduced to said contacting device at a temperature greater than about 260°C and exit said contacting device at a temperature less than about 60°C.

5. The method of claim 4 wherein said contacting device is a cooling tower having means to spray said acid into said gases.

6. The method of claim 5 wherein said recirculating acid is added to said cooling tower at a rate of between about 0.5 and 2.5 $\times$ 10⁶ m² new surface area per hour.

7. The method of claim 6 wherein said recirculating acid is added at a rate of from between about 1.0 and 2 $\times$ 10⁶ m² new surface area per hour.

FIGURE 1

FIGURE 2

# DISULFONATE FLOW DIAGRAM

0 221 446